# EUROPEAN PATENT APPLICATION

(11) **EP 4 782 711 A1**
(43) Date of publication of application: **29.07.2026**
(21) Application number: 26150129.0
(22) Date of filing: 05.01.2026
(51) Int. Cl.: F16C 19/16, F16C 33/58, F16C 33/78

(54) **A SEALING STRUCTURE FOR A STEERING BEARING**

(30) Priority: 06.01.2025 CN 202510012084
(71) Applicant: Yuhuan Mrlun Machinery Co., Ltd., Taizhou, Zhejiang 317602 (CN)
(72) Inventor: ZHANG, Biao, Taizhou, 317602 (CN); DENG, Xuanbo, Taizhou, 317602 (CN); CHEN, Tao, Taizhou, 317602 (CN); LIAN, Weili, Taizhou, 317602 (CN)
(74) Representative: Vitina, Maruta

(57) **Abstract**

A sealing structure for a steering bearing includes a plastic upper cover, a rotating assembly, a plastic lower cover, an inner seal retainer and an outer seal retainer. The rotating assembly is arranged inside the plastic upper cover. The plastic lower cover is rotatably connected to the plastic upper cover through the rotating assembly. The inner seal retainer is arranged at a connection between an inner side of the plastic upper cover and an inner side of the plastic lower cover to seal the inner side of the plastic upper cover and the inner side of the plastic lower cover. The outer seal retainer is arranged at a connection between an outer side of the plastic upper cover and an outer side of the plastic lower cover to seal the plastic upper cover and the outer side of the plastic lower cover.

## Description

### TECHNICAL FIELD

This application relates to sealing techniques of steering bearings, and more particularly to a sealing structure for a steering bearing.

### BACKGROUND

Bearings primarily play a role in fixing other components and reducing a load friction coefficient during the mechanical transmission. In other words, in the case of relative motion between other parts on a shaft, the bearing can reduce a friction coefficient during the power transmission and keep the part fixed at a central position of the shaft. The bearing is an important component in the modern mechanical equipment, mainly supporting a mechanical rotating body to reduce the mechanical load friction coefficient during the transmission process.

In the steering bearing used for automobile shock absorption, since the shock absorber is exposed to the external environment and is susceptible to rainwater erosion, which will affect the rotation of the bearing, it is necessary to introduce a sealing mechanism. The existing sealing structures for the steering bearing struggle with poor sealing performance and short service life.

In view of this, the present disclosure makes improvement and optimization to the existing sealing structure, so as to develop a sealing structure of the steering bearing.

### SUMMARY

In order to address the above problems, the following technical solutions are adopted herein.

A sealing structure for a steering bearing, comprising:
a plastic upper cover;
a rotating assembly;
a plastic lower cover;
an inner seal retainer; and
an outer seal retainer;
wherein the rotating assembly is arranged inside the plastic upper cover;
the plastic lower cover is rotatably connected to the plastic upper cover through the rotating assembly;
the inner seal retainer is arranged at a connection between an inner side of the plastic upper cover and an inner side of the plastic lower cover to seal the inner side of the plastic upper cover and the inner side of the plastic lower cover; and
the outer seal retainer is arranged at a connection between an outer side of the plastic upper cover and an outer side of the plastic lower cover to seal the outer side of the plastic upper cover and the outer side of the plastic lower cover.

In some embodiments, the rotating assembly comprises an upper track, a lower track, a retaining frame and a steel ball; retaining frame
the upper track is attached to the plastic upper cover;
the lower track is attached to the plastic lower cover;
the retaining frame is arranged between the upper track and the lower track; and
the steel ball is arranged on the retaining frame, and is configured to rotate while abutting against the upper track and the lower track.

In some embodiments, an outer sealing lip is arranged on the inner side of the plastic upper cover, and is matchedly connected to the outer seal retainer;
a first mounting groove is arranged on the plastic lower cover, and is configured to accommodate the outer seal retainer and the inner seal retainer; and
a rectangular groove is arranged on the inner side of the plastic upper cover.

In some embodiments, the outer seal retainer comprises a first outer sealing ring; the first outer sealing ring is arranged at the first mounting groove, and is provided with two first retaining plates; and the two first retaining plates are in interference contact with the plastic upper cover of two sides of the outer sealing lip; and
the inner seal retainer comprises a first inner sealing ring; the first inner sealing ring is arranged at the first mounting groove, and is provided with a second retaining plate; and the second retaining plate is in interference contact with the inner side of the plastic upper cover.

In some embodiments, the outer seal retainer comprises a second outer sealing ring; the second outer sealing ring is arranged at the first mounting groove, and is provided with three first retaining plates; two of the three first retaining plates are in interference contact with the plastic upper cover of two sides of the outer sealing lip; and the rest one of the three first retaining plates is in interference contact with the inner side of the plastic upper cover; and
the inner seal retainer comprises a second inner sealing ring; the second inner sealing ring is arranged at the first mounting groove, and is provided with two second retaining plates; one of the two second retaining plates is in interference contact with the inner side of the plastic upper cover; and the other of the two second retaining plates is in interference contact with the rectangular groove on the inner side of the plastic upper cover to enable multi-layer sealing.

In some embodiments, the outer sealing lip is arranged on the outer side of the plastic lower cover, and is matchedly connected to the outer seal retainer;
an inner sealing lip is arranged on the inner side of the plastic lower cover, and is matchedly connected to the inner seal retainer;
a second mounting groove is arranged on the plastic upper cover, and is configured to accommodate the outer seal retainer; and
a rectangular is arranged on the inner side of the plastic upper cover, and is configured to accommodate the inner seal retainer.

In some embodiments, the outer seal retainer comprises a third outer sealing ring; the third outer sealing ring is arranged at the second mounting groove, and is provided with two first retaining plates; and the two first retaining plates are in interference contact with the plastic lower cover of two sides of the outer sealing lip; and
the inner seal retainer comprises a third inner sealing ring; the third inner sealing ring is arranged at the rectangular groove, and is provided with two second retaining plates; the two second retaining plates are in interference contact with the plastic lower cover of two sides of the inner sealing lip.

In some embodiments, the outer seal retainer comprises a fourth outer sealing ring; the fourth outer sealing ring is arranged at the second mounting groove, and is provided with two first retaining plates; one of the two first retaining plates is in interference contact with the plastic lower cover on an inner side of the outer sealing lip; and the other of the two first retaining plates is attached to an outer end of the plastic lower cover; and
the inner seal retainer comprises a fourth inner sealing ring; the fourth inner sealing ring is arranged at the rectangular groove, and is provided with two second retaining plates; and the two second retaining plates are in interference contact with the plastic lower cover of two sides of the inner sealing lip.

Compared to the prior art, the present disclosure has the following beneficial effects.

Provided with the inner seal retainer and the outer seal retainer, the plastic upper cover and the plastic lower cover are configured to enable double-layer or multi-layer sealing. In a case that the plastic upper cover rotates and the plastic lower cover remains stationary, external muddy water and dust are prevented from entering the interior of the bearing and eroding the steel ball, the inner track and the outer track, thereby ensuring a smooth rotation.

### BRIEF DESCRIPTION OF THE DRAWINGS

In order to illustrate the technical solutions in the prior art or in the embodiments of the present disclosure more clearly, the accompanying drawings needed in the description of the prior art or the embodiments of the present disclosure will be briefly described below. Obviously, presented in the accompanying drawings are merely some embodiments of the disclosure, and other drawings can also be obtained by those skilled in the art based on these accompanying drawings without paying creative effort.
Fig. 1 is a perspective view according to an embodiment of the present disclosure;
Fig. 2 is a sectional perspective view according to an embodiment of the present disclosure;
Fig. 3 is an exploded perspective view according to an embodiment of the present disclosure;
Fig. 4 is a first sectional view according to an embodiment of the present disclosure;
Fig. 5 is a partially enlarged view of Fig. 4;
Fig. 6 is a second sectional view according to an embodiment of the present disclosure;
Fig. 7 is an enlarged view of portion A in Fig. 6;
Fig. 8 is a third sectional view according to an embodiment of the present disclosure;
Fig. 9 is an enlarged view of portion B in Fig. 8;
Fig. 10 is a fourth sectional view according to an embodiment of the present disclosure;
Fig. 11 is an enlarged view of portion C in Fig. 10; and
Fig. 12 is an enlarged view of portion D in Fig. 5.

In the figures: 1-plastic upper cover; 2-upper track; 3-retaining frame; 4-steel ball; 5-lower track; 6-inner seal retainer; 61-first inner sealing ring; 62-second inner sealing ring; 63-third inner sealing ring; 64-fourth inner sealing ring; 7-plastic lower cover; 8-outer seal retainer; 81-first outer sealing ring; 82-second outer sealing ring; 83-third outer sealing ring; 84-fourth outer sealing ring; 9-inner sealing lip; 10-outer sealing lip; 11-first mounting groove; 12-second mounting groove; 13-rectangular groove; 14-first retaining plate; and 15-second retaining plate.

### DETAILED DESCRIPTION OF EMBODIMENTS

The technical solutions in the embodiments of the present disclosure will be clearly and completely described below in conjunction with the accompanying drawings in the embodiments of the present disclosure. Obviously, the described embodiments are only some embodiments of the present disclosure, not all embodiments. Based on the embodiments in the present disclosure, all other embodiments obtained by those of ordinary skill in the art without paying creative effort shall fall within the scope of the present disclosure.

### EMBODIMENT 1

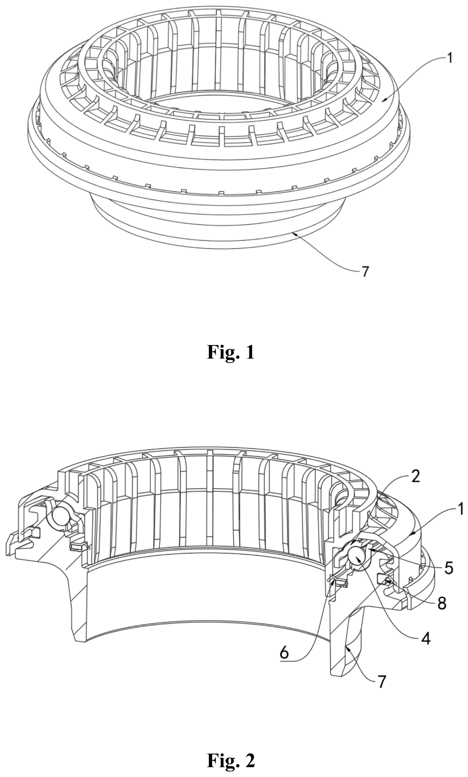

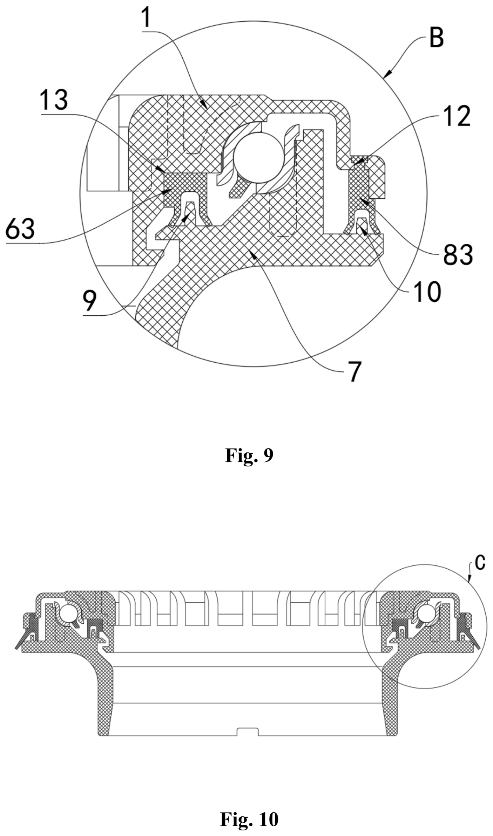

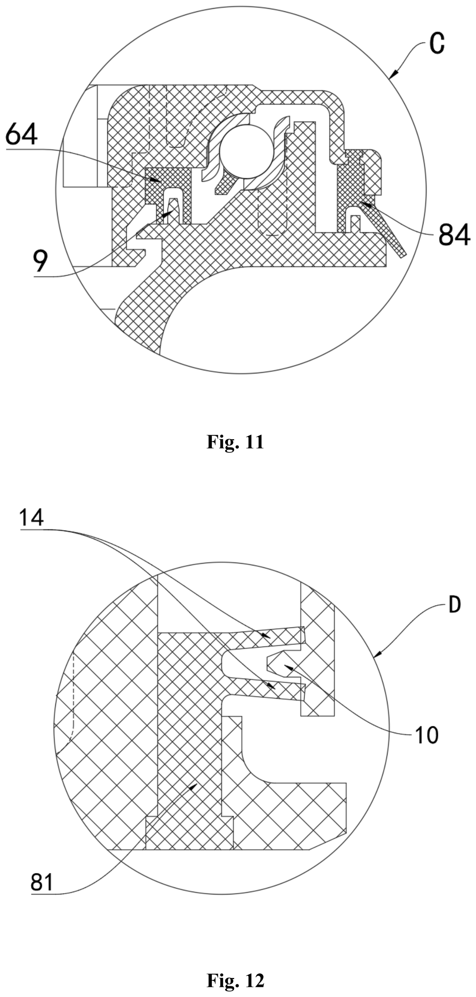

Referring to Figs. 1-12, a sealing structure for a steering bearing includes a plastic upper cover 1, a rotating assembly, a plastic lower cover 7, an inner seal retainer 6 and an outer seal retainer 8. The rotating assembly is arranged on the plastic upper cover 1. The plastic lower cover 7 is rotatably connected to the plastic upper cover 1 through the rotating assembly. The inner seal retainer 6 is arranged at a connection between an inner side of the plastic upper cover 1 and an inner side of the plastic lower cover 7 to seal the inner side of the plastic upper cover 1 and the inner side of the plastic lower cover 7. The outer seal retainer 8 is arranged at a connection between an outer side of the plastic upper cover 1 and an outer side of the plastic lower cover 7 to seal the outer side of the plastic upper cover 1 and the outer side of the plastic lower cover 7.

Referring to Figs. 1-3, the rotating assembly includes an upper track 2, a lower track 5, a retaining frame 3 and a steel ball 4. The upper track 2 is attached to the plastic upper cover 1. The lower track 5 is attached to the plastic lower cover 7. The retaining frame 3 is arranged between the upper track 2 and the lower track 5. The steel ball 4 is arranged on the retaining frame 3, and is configured to rotate while abutting against the upper track 2 and the lower track 5.

In this embodiment, the inner seal retainer 6 and the outer seal retainer 8 are configured to seal the plastic upper cover 1 and the plastic lower cover 7. When the plastic upper cover 1 rotates and the plastic lower cover 7 remains stationary, external muddy water and dust are prevented from entering an interior of a bearing and eroding the steel ball 4, an inner track and an outer track, thereby ensuring a smooth rotation. When traditional sealing rings are in use, one end of a plastic cover rotates while the other end of the plastic cover remains stationary, causing a sliding friction to occur between the sealing ring and the plastic cover. Long-term use can cause fatigue of the sealing ring material, resulting in poor sealing performance.

In this case, retaining plates arranged on the sealing rings are made of a rubber material, having an elasticity, such that the retaining plates undergo a certain degree of elastic deformation when the sealing rings are each in interference contact with the plastic cover. Thus, after being used for a period of time, even if there is frictional wear, the retaining plates are closely attached to the plastic cover under an elasticity action, without affecting the sealing performance, thereby improving using performance.

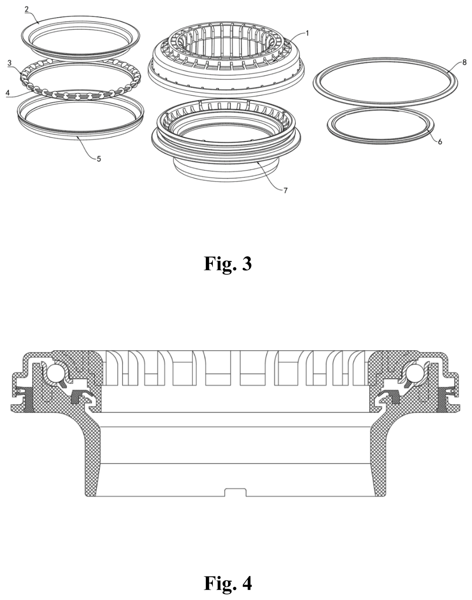

Referring to Figs. 4-7, an outer sealing lip 10 is arranged on the inner side of the plastic upper cover 1, and is matchedly connected to the outer seal retainer 8. A first mounting groove 11 is arranged on the plastic lower cover 7, and is configured to accommodate the outer seal retainer 8 and the inner seal retainer 6. A rectangular groove 13 is arranged on the inner side of the plastic upper cover 1.

Referring to Figs. 4-5 and Fig. 12, the outer seal retainer 8 includes a first outer sealing ring 81. The first outer sealing ring 81 is arranged at the first mounting groove 11, and is provided with two first retaining plates 14. The two first retaining plates 14 are in interference contact with the plastic upper cover 1 of two sides of the outer sealing lip 10. The inner seal retainer 6 includes a first inner sealing ring 61. The first inner sealing ring 61 is arranged at the first mounting groove 11, and is provided with a second retaining plate 15. The second retaining plate 15 is in interference contact with the inner side of the plastic upper cover 1.

In an embodiment, an annular outer sealing lip 10 is arranged on the inner side of the plastic upper cover 1 close to an outer end of the plastic lower cover 7. A position of the first outer sealing ring 81 is determined by arranging the first outer sealing ring 81 at the first mounting groove 11 of the plastic lower cover 7. The first outer sealing ring 81 is provided with two first retaining plates 14, which are in interference contact with the plastic upper cover 1 of two sides of the outer sealing lip 10. When a small amount of rainwater and sediment pass through one of the two first retaining plates 14, it will first be blocked by the outer sealing lip 10 to withstand the impact force of the sediment. When they move to a connection between the other of the two first retaining plates 14 and the plastic upper cover 1, it is difficult for them to pass through the other of the two first retaining plates 14, thereby achieving dual-layer sealing. As an inner side of the steering bearing is less impacted by the rainwater and sediment than an outer side of the steering bearing, a second retaining plate 15 is provided for the first inner sealing ring 61 on the inner side of the steering bearing to enable the sealing performance, thereby reducing production costs.

### EMBODIMENT 2

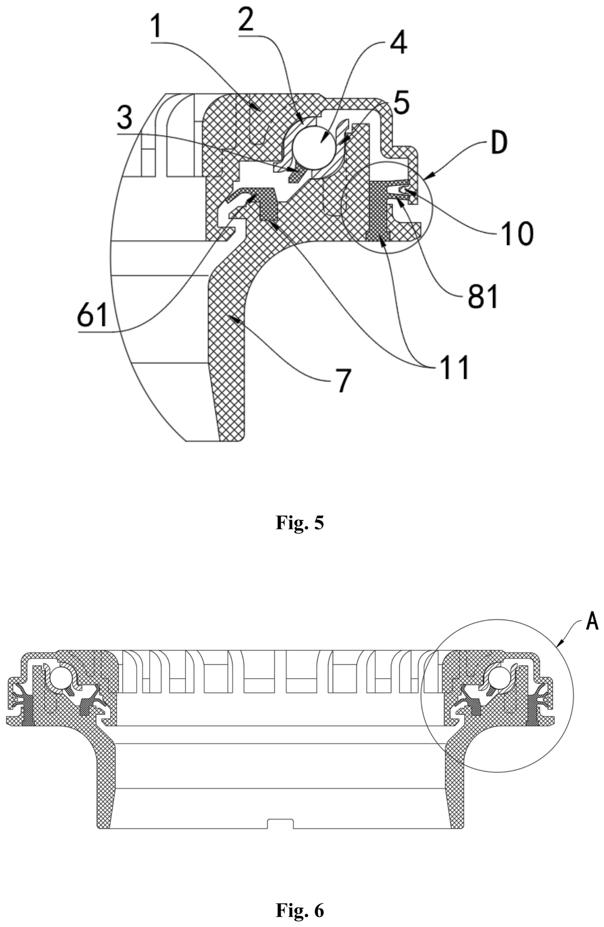

Referring to Figs. 6-7, the outer seal retainer 8 includes a second outer sealing ring 82. The second outer sealing ring 82 is arranged at the first mounting groove 11, and is provided with three first retaining plates 14. Two of the three first retaining plates 14 are in interference contact with the plastic upper cover 1 of two sides of the outer sealing lip 10. The rest one of the three first retaining plates 14 is in interference contact with the inner side of the plastic upper cover 1.

Referring to Figs. 6-7, the inner seal retainer 6 includes a second inner sealing ring 62. The second inner sealing ring 62 is arranged at the first mounting groove 11, and is provided with two second retaining plates 15. One of the two second retaining plates 15 is in interference contact with the inner side of the plastic upper cover 1. The other of the two second retaining plates 15 is in interference contact with the rectangular groove 13 on the inner side of the plastic upper cover 1 to enable multi-layer sealing.

In an embodiment, when it is in an environment with a lot of rainwater and sediment, the sealing structure is provided with the second outer sealing ring 82. Specifically, the second outer sealing ring 82 is provided with three first retaining plates 14, which are in interference contact with the plastic upper cover 1. When a small amount of rainwater and sediment pass through one of the three first retaining plates 14, they will first be blocked by the outer sealing lip 10 to withstand the impact force of the sediment. When they move to a connection between the next of the three first retaining plates 14 and the plastic upper cover 1, it is difficult for them to pass through the next of the three first retaining plates 14. Even if a trace amount of sediment passes through the next of the three first retaining plates 14, it will be difficult to pass through the last of the three first retaining plates 14, thus achieving three-layer sealing and further enhancing the sealing performance.

Due to a large amount of sediment, the second inner sealing ring 62 is provided with two second retaining plates 15. One of the two second retaining plates 15 has a longer length than the other of the two second retaining plates 15. When contacting with the rectangular groove 13 on the plastic upper cover 1, one end of one of the two second retaining plates 15 having a longer length is in interference contact with a top end of the rectangular groove 13, but the other end of one of the two second retaining plates produced by folding is in interference contact with a side of the rectangular groove 13, thereby enabling dual-layer sealing through one of the two second retaining plates 15 and achieving three-layer sealing through the other of the two second retaining plates 15.

### EMBODIMENT 3

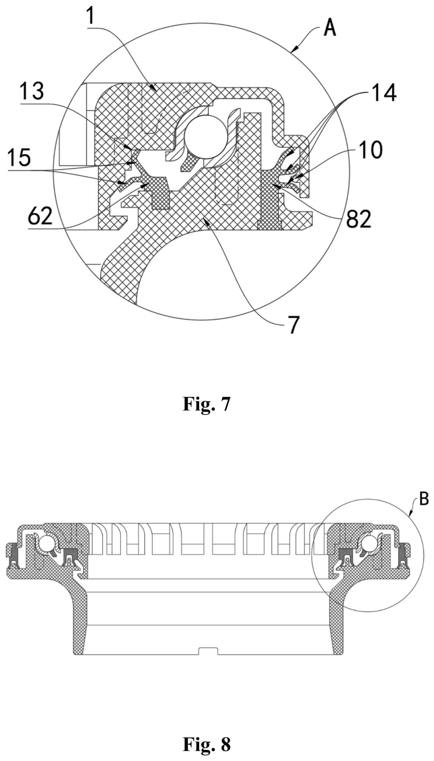

Referring to Figs. 8-11, the outer sealing lip 10 is arranged on the outer side of the plastic lower cover 7, and is matchedly connected to the outer seal retainer 8. The inner sealing lip 9 is arranged on the inner side of the plastic lower cover 7, and is matchedly connected to the inner seal retainer 6. A second mounting groove 12 is arranged on the plastic upper cover 1, and is configured to accommodate the outer seal retainer 8. The rectangular groove 13 is arranged on the inner side of the plastic upper cover 1, and is configured to accommodate the inner seal retainer 6.

Referring to Figs. 8-11, the outer seal retainer 8 includes a third outer sealing ring 83. The third outer sealing ring 83 is arranged at the second mounting groove 12, and is provided with two first retaining plates 14. The two first retaining plates 14 are in interference contact with the plastic lower cover 7 of two sides of the outer sealing lip 10. The inner seal retainer 6 includes a third inner sealing ring 63. The third inner sealing ring 63 is arranged at the rectangular groove 13, and is provided with two second retaining plates 15. The two second retaining plates 15 are in interference contact with the plastic lower cover 7 of two sides of the inner sealing lip 9.

In an embodiment, a difference from the Embodiments 1-2 lies in that structures of the plastic upper cover 1 and the plastic lower cover 7 in this embodiment are changed. Specifically, the third outer sealing ring 83 is arranged at the second groove 12. The outer sealing lip 10 is arranged on the outer side of the plastic lower cover 7. The third outer sealing ring 83 is provided with two first retaining plates 14. The two first retaining plates 14 are in interference contact with the plastic lower cover 7 of two sides of the outer sealing lip 10. When a small amount of rainwater and sediment pass through one of the two first retaining plates 14, they will first be blocked by the outer sealing lip 10 to withstand the impact force of the sediment. When they move to a connection between the other of the two first retaining plates 14 and the plastic lower cover 7, it is difficult for them to pass through the other of the two first retaining plates 14, thereby achieving dual-layer sealing. The third inner sealing ring 63 is arranged at the rectangular groove 13. The inner sealing lip 9 is arranged on the inner side of the plastic lower cover 7. The third inner sealing ring 63 is provided with two second retaining plates 15. The two second retaining plates 15 are in interference contact with the plastic lower cover 7 of two sides of the inner sealing lip 9. When a small amount of rainwater and sediment pass through one of the two second retaining plates 14, they will first be blocked by the inner sealing lip 9 to withstand the impact force of the sediment. When they move to a connection between the other of the two second retaining plates 15 and the plastic lower cover 7, it is difficult for them to pass through the other of the two second retaining plates 15, thereby achieving a dual-layer sealing.

### EMBODIMENT 4

Referring to Figs. 8-11, the outer seal retainer 8 includes a fourth outer sealing ring 84. The fourth outer sealing ring 84 is arranged at a second mounting groove 12, and is provided with two first retaining plates 14. One of the two first retaining plates 14 is in interference contact with the plastic lower cover 7 on an inner side of the outer sealing lip 10, and the other of the two first retaining plates 14 is attached to an outer end of the plastic lower cover 7. The inner seal retainer 6 includes a fourth inner sealing ring 64. The fourth inner sealing ring 64 is arranged at the rectangular groove 13, and is provided with two second retaining plates 15 in interference contact with the plastic lower cover 7 of two sides of the inner sealing lip 9.

In an embodiment, the fourth outer sealing ring 84 is arranged at the second mounting groove 12, and is provided with two first retaining plates 14. One of the two first retaining plates 14 arranged inward is in interference contact with the plastic lower cover 7 on the inner side of the outer sealing lip 10. The other of the two first retaining plates 14 having a longer length is provided with a longer end exposed outside through the plastic lower cover 7. Through the elastic configuration of the two first retaining plates 14, a side of the other of the two first retaining plates 14 is in interference contact with the outer end of the plastic lower cover 7 to enable sealing performance. At the same time, it is convenient to clean the bearing. There is no need to install or disassemble the steering bearing. By lifting the other of the two first retaining plates 14 having a longer length, the sediment passing through a first layer of the sealing ring can be cleaned, which is very convenient. The fourth inner sealing ring 64 is arranged at the rectangular groove 13. The inner sealing lip 9 is arranged on the inner side of the plastic lower cover 7. The fourth inner sealing ring 64 is provided with two second retaining plates 15. The two second retaining plates 15 are in interference contact with the plastic lower cover 7 of two sides of the inner sealing lip 9. When a small amount of rainwater and sediment pass through one of the two second retaining plates 15, they will first be blocked by the inner sealing lip 9 to withstand the impact force of the sediment. When they move to a connection between the other of the two second retaining plates 15 and the plastic lower cover 7, it is difficult for them to pass through the other of the two second retaining plates 15, thereby achieving dual-layer sealing.

The embodiments disclosed above are merely better embodiments of the disclosure and are not intended to limit the present disclosure. Any modification, equivalent replacement and improvement made by those of ordinary skill in the art within the spirit and principle of the present disclosure shall fall within the scope of the disclosure defined by the appended claims.

## Claims

1. A sealing structure for a steering bearing, comprising:
a plastic upper cover (1);
a rotating assembly;
a plastic lower cover (7);
an inner seal retainer (6); and
an outer seal retainer (8);
**characterized in that** the rotating assembly is arranged inside the plastic upper cover (1);
the plastic lower cover (7) is rotatably connected to the plastic upper cover (1) through the rotating assembly;
the inner seal retainer (6) is arranged at a connection between an inner side of the plastic upper cover (1) and an inner side of the plastic lower cover (7) to seal the inner side of the plastic upper cover (1) and the inner side of the plastic lower cover (7); and
the outer seal retainer (8) is arranged at a connection between an outer side of the plastic upper cover (1) and an outer side of the plastic lower cover (7) to seal the outer side of the plastic upper cover (1) and the outer side of the plastic lower cover (7);
the rotating assembly comprises an upper track (2), a lower track (5), a retaining frame (3), a steel ball (4), an outer sealing lip (10), a mounting groove (11) and a rectangular groove (13);
the upper track (2) is attached to the plastic upper cover (1);
the lower track (5) is attached to the plastic lower cover (7);
the retaining frame (3) is arranged between the upper track (2) and the lower track (5);
the steel ball (4) is arranged on the retaining frame (3), and is configured to rotate while abutting against the upper track (2) and the lower track (5);
the outer sealing lip (10) is arranged on the inner side of the plastic upper cover (1), and is configured as an annular protrusion along a radial direction of the plastic upper cover (1); and the outer sealing lip (10) is matchedly connected to the outer seal retainer (8);
the mounting groove (11) is arranged on the plastic lower cover (7), and is configured to accommodate the outer seal retainer (8) and the inner seal retainer (6);
the rectangular groove (13) is arranged on the inner side of the plastic upper cover (1);
the outer seal retainer (8) comprises an outer sealing ring (82); and the outer sealing ring (82) is arranged at the mounting groove (11), and is provided with three first retaining plates (14); two of the three first retaining plates (14) are respectively arranged at axial two sides of the outer sealing lip (82), and are in interference contact with the plastic upper cover (1) at the axial two sides of the outer sealing lip (82); and the rest one of the three first retaining plates (14) is in interference contact with the inner side of the plastic upper cover (1); and
the inner seal retainer (6) comprises an inner sealing ring (62); and the inner sealing ring (62) is arranged on the mounting groove (11), and is provided with two second retaining plates (15); one of the two second retaining plates (15) is in interference contact with the inner side of the plastic upper cover (1); and the other of the two second retaining plates (15) is in interference contact with the rectangular groove (13) on the inner side of the plastic upper cover (1) to enable multi-layer sealing.
